(19) Europäisches Patentamt
European Patent Office
Office européen des brevets

(11) Veröffentlichungsnummer: **0 391 204**
**A2**

(12) **EUROPÄISCHE PATENTANMELDUNG**

(21) Anmeldenummer: **90105752.1**

(22) Anmeldetag: **27.03.90**

(51) Int. Cl.[5]: **C08G 85/00, C08G 63/79, C08G 63/185, C08G 69/32**

(30) Priorität: **07.04.89 DE 3911220**

(43) Veröffentlichungstag der Anmeldung:
**10.10.90 Patentblatt 90/41**

(84) Benannte Vertragsstaaten:
**DE FR GB IT**

(71) Anmelder: **BAYER AG**

**D-5090 Leverkusen 1 Bayerwerk(DE)**

(72) Erfinder: **Arlt, Dieter, Prof. Dr.**
**Rybniker Strasse 2**
**D-5000 Köln 80(DE)**
Erfinder: **Bader, Axel, Dr.**
**Unterscheider Weg 18**
**D-5060 Bergisch Gladbach 2(DE)**
Erfinder: **Eckhardt, Volker, Dr.**
**Bodelschwinghstrasse 14**
**D-4150 Krefeld(DE)**
Erfinder: **Idel, Karsten-Josef, Dr.**
**Am Schwarzenkamp 38**
**D-4150 Krefeld(DE)**
Erfinder: **Kleiner, Frank-Gerald, Dr.**
**Am Sonnenhang 62**
**D-5090 Leverkusen 3(DE)**

(54) **Verfahren zur Herstellung von niedrigschmelzenden Polymeren mit mindestens einer Z-konfigurierten Stilbengruppierung.**

(57) Niedrigschmelzende Polymere, die mindestens eine Z-konfigurierte Stilbengruppierung enthalten, werden hergestellt, indem man Z-konfigurierte, bifunktionelle Stilbenverbindungen mit bifunktionellen Monomeren, Oligomeren oder höhermolekularen Komponenten bei Temperaturen von -30 bis 250 °C, gegebenenfalls in Gegenwart von organischen Lösungs-und/oder Verdünnungsmitteln und/oder Katalysatoren unter Erhalt der Z-Konfiguration der Stilbeneinheiten umsetzt. Die niedrigschmelzenden Polymere können in üblicher Weise zu Formkörpern verschiedenster Art verarbeitet werden, die durch Behandlung bei Temperaturen von 250 bis 500 °C und/oder durch Bestrahlung im Wellenlängenbereich von 200 bis 800 nm in hochschmelzende und hochwärmeformbeständige Kunststoffartikel überführt werden.

EP 0 391 204 A2

# Verfahren zur Herstellung von niedrigschmelzenden Polymeren mit mindestens einer Z-konfigurierten Stilbengruppierung

Die Erfindung betrifft ein Verfahren zur Herstellung von niedrigschmelzenden, leicht verarbeitbaren Polymeren, die mindestens eine Z-konfigurierte Stilbengruppierung enthalten.

Die Realisierbarkeit neuer Technologien ist in hohem Maße von der Verfügbarkeit geeigneter Werkstoffe abhängig. Insbesondere in stark expandierenden Marktsegmenten, wie Elektrotechnik oder Elektronik, Transportwesen oder im chemischen Anlagenbau, werden für High-Tech-Anwendungen neue Kunststoffe benötigt, die erhöhten Anforderungen bezüglich Wärmeformbeständigkeit und Chemikalienbeständigkeit gewachsen sind.

Konventionellen thermoplastisch verarbeitbaren Kunststoffen sind bezüglich ihrer Wärmeformbeständigkeit Grenzen gesetzt. Zwar können mit Poly(p-phenylensulfid) Werte von 260° C, mit Polyetherketonen sogar Werte zwi schen 310 und 340° C (HDT-A-T.) erreicht werden; eine noch höhere Wärmeformbeständigkeit führt aber unweigerlich zu Problemen bei der Verarbeitung solcher Produkte, da die zur Verarbeitung notwendigen Temperaturen 400° C, d.h. die üblicherweise bei thermoplastischer Verarbeitung realisierbare Temperaturobergrenze, deutlich übersteigen.

Um hohe Verarbeitungstemperaturen zu vermeiden, können hochwärmeformbeständige Polymere auch über ihre Lösung verarbeitet werden. Im Falle von Polyaramiden, wie Poly-(1,4-phenylenterephthalamid) oder Poly-(1,3-phenylenterephthalamid), können auf diese Weise Fasern mit außerordentlich attraktiven Eigenschaften versponnen werden. Aufgrund der hohen Chemikalienbeständigkeit, d.h. Schwerlöslichkeit, müssen jedoch schwerflüchtige und aggressive Lösungsmittel, wie konzentrierte Schwefelsäure, eingesetzt werden. Die Schwierigkeiten bei der Entfernung derartiger Lösungsmittel schränken jedoch den Anwendungsbereich derartiger Polymere stark ein.

Die JP-PS 62/256825 beschreibt Polyester aus 1,4-Bis-(4′-carboxystyryl)-benzol oder Stilbendicarbonsäure und Tetraethylenglykol. Die eingesetzten Dicarbonsäuren sind eine Mischung aus cis- und trans-konfigurierten Spezies und können nach erfolgter Polykondensation thermisch quantitativ in die trans-Konfiguration umgewandelt werden. Hochwärmeformbeständige bzw. hochchemikalienbeständige Polymere werden aufgrund des Einsatzes aliphatischer Diole nicht erhalten. Eine gezielte Nutzung der cis/trans-Isomerisierung zur Verbesserung der Verarbeit barkeit wird nicht beschrieben. Die Polymersynthese erfolgt unter Bedingungen, bei denen bereits eine Umwandlung in die trans-Konfiguration stattfindet.

Aufgabe der vorliegenden Erfindung war es daher, ein Verfahren zur Herstellung von niedrigschmelzenden und leicht löslichen, gut verarbeitbaren Polymeren bereitzustellen, die nach erfolgter Verarbeitung gezielt in hochwärmeformbeständige und besonders chemikalienbeständige Kunststoffartikel umgewandelt werden können.

Gegenstand der Erfindung ist also ein Verfahren zur Herstellung von niedrigschmelzenden Polymeren, die mindestens eine Z-konfigurierte Stilbengruppierung enthalten, das dadurch gekennzeichnet ist, daß man Z-konfigurierte, bifunktionelle Stilbenverbindungen der Formel (I)

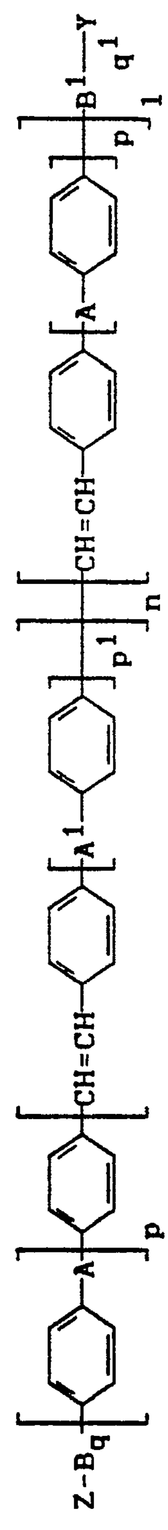

(I),

worin

Z und Y gleich oder verschieden sind und für COOR, COR, COCl, OCOCl, NCO, NRCOCl, NHR, OR oder Cl stehen mit R = Wasserstoff oder $C_1$-$C_8$-Alkyl,
A und $A^1$ gleich oder verschieden sind und für eine chemische Bindung oder CH=CH stehen,

B 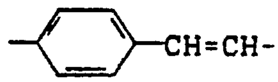 und

$B^1$ 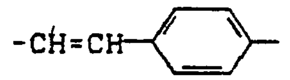 bedeuten,

l 0 oder 1,
p und $p^1$ 0 oder 1,
q und $q^1$ 0 oder 1 und
n 0, 1 oder 2 bedeuten,

mit bifunktionellen Monomeren, Oligomeren oder höhermolekularen Komponenten, die bekanntermaßen für den Aufbau von Polyestern, Polycarbonaten, Polyamiden, Polyurethanen, Polyethern oder Polyphenylensulfiden in Frage kommen, bei Temperaturen von -30 bis 250 °C, bevorzugt -10 bis 100 °C, gegebenenfalls in Gegenwart von organischen Lösungs- und/oder Verdünnungsmitteln und/oder Katalysatoren unter Erhalt der Z-Konfiguration der Stilbeneinheiten umsetzt.

Bevorzugte Stilbenverbindungen der Formel (I) mit mindestens einer Z-konfigurierten Doppelbindung sind beispielsweise 4,4'-Stilbendicarbonsäure sowie deren Disäurechloride und Diester, 4,4'-Dihydroxystilben sowie entsprechende Bischlorkohlensäureester, 4,4'-Diaminostilben, 4,4'-Diisocyanatostilben, 4,4'-Di-(N-methyl)-aminostilben, 4,4'-Dichlorstilben, 1,2-Bis-(4-carboxybiphenyl)-ethen sowie deren Disäurechloride und Diester, 1,2-Bis-(4-hydroxybiphenyl)-ethen sowie entsprechende Bischlorkohlensäureester, 1,2-Bis-(4-aminobiphenyl)-ethen, 1,2-Bis-(4-isocyanatobiphenyl)-ethen, 1,2-Bis-(4-N-methylaminobiphenyl)-ethen, 1,2-Bis-(4-mercaptobiphenyl)-ethen, 1,2-Bis-(4-brombiphenyl)-ethen, 1,2-Bis-(4-chlorbiphenyl)-ethen, 1-(4-Carboxybiphenyl)-2-(4-carboxyphenyl)-ethen sowie dessen Disäurechloride und Diester, 1-(4-Hydroxybiphenyl)-2-(4-hydroxyphenyl)-ethen sowie entsprechende Bischlorkohlensäureester, 1-(4-Aminobiphenyl)-2-(4-aminophenyl)-ethen, 1-4-Isocyanatobiphenyl)-2-(4-isocyanatophenyl)-ethen, 1-(4-N-Methylaminobiphenyl)-2-(4-N-methylaminophenyl)-ethen, 1-(4-Mercaptobiphenyl)-2-(4-mercaptophenyl)-ethen, 1-(4-Brombiphenyl)-2-(4-mercaptophenyl)-ethen, 1-(4-Brombiphenyl)-2-(4-bromphenyl)-ethen, 1-(4-Chlorbiphenyl)-2-(4-chlorphenyl)-ethen, 1,4-Bis-(4-carboxystyryl)-benzol sowie dessen Disäurechloride und Diester, 1,4-Bis-(4-hydroxystyryl)-benzol sowie entsprechende Bischlorkohlensäureester, 1,4-Bis-(4-aminostyryl)-benzol, 1,4-Bis-(4-isocyanatostyryl)-benzol, 1,4-Bis-(4-N-methylaminostyryl)-benzol, 1,4-Bis-(4-mercaptostyryl)-benzol, 1,4-Bis-(4-bromstyryl)-benzol, 1,4-Bis-(4-chlorstyryl)-benzol, 1-(4-Hydroxyphenyl)-2-(4-carboxyphenyl)-ethen, 1-(4-Aminophenyl)-2-(4-carboxyphe nyl)-ethen, 1-(4-Aminophenyl)-2-(4-hydroxyphenyl)-ethen, 1-(4-Chlorphenyl)-2-(4-hydroxyphenyl)-ethen und 1-(4-Chlorphenyl)-2-(4-mercaptophenyl)-ethen; 4,4'-Bis-(4-carboxystyryl)stilben sowie dessen Disäurechloride und Diester, 4,4'-bis-(4-hydroxystyryl)stilben sowie entsprechende Bischlorkohlensäureester, 4,4'-Bis-(4-aminostyryl)stilben, 4,4'-Bis-(4-isocyanatostyryl)stilben, 4,4'-Bis-(4-N-methylaminostyryl)stilben, 4,4'-Bis-(4-chlorstyryl)stilben, 4,4'-Bis-(4-bromstyryl)stilben, 4,4'-Bis-(4-carboxystyryl)biphenyl, sowie dessen Disäurechloride und Diester, 4,4'-Bis-(4-hydroxystyryl)-biphenyl sowie entsprechende Bischlorkohlensäureester, 4,4'-bis-(4-aminostyryl)-biphenyl, 4,4'-Bis-(4-isocyanatostyryl)-biphenyl, 4,4'-Bis-(4-N-methylaminostyryl)-biphenyl, 4,4'-Bis-(4-chlorstyryl)-biphenyl, 4,4'-Bis-(4-bromstyryl)-biphenyl. Besonders bevorzugt werden 4,4'-Stilbendicarbonsäure und 4,4'-Stilbendicarbonsäuredichlorid eingesetzt.

Die Z-konfigurierten Stilbenverbindungen können nach Verfahren hergestellt werden, die in der deutschen Patentanmeldung P 39 11 221.7 beschrieben sind.

Nach dem erfindungsgemäßen Verfahren werden vorzugsweise mindestens eine Z-konfigurierte Stilbengruppierung enthaltende Polyester, Polyestercarbonate, Polycarbonate oder Polyamide hergestellt.

Zur Herstellung von Polyestern nach dem erfindungsgemäßen Verfahren werden Stilbenverbindungen der Formel (I), mit Z und Y = COOH, COCl, COOR mit R für $C_1$-$C_8$-Alkyl, mit Dihydroxyverbindungen der Formel (II)

$HO-Ar-(X)_o-(Ar)_p-OH$ (II),

worin

Ar für 6 bis 18 C-Atome enthaltende aromatische Reste steht, die gegebenenfalls durch Halogen (F, Cl, Br), $C_1$-$C_4$-Alkyl-, $C_1$-$C_4$-Alkoxy-, $C_6$-$C_{10}$-Aryl- oder $C_6$-$C_{10}$-Aryloxyreste substituiert sein können,
X für -CO-, $-SO_2-$, -S-, $-CH_2-$, $-C(CH_3)_2-$, einen Alkylen- oder Alkylidenrest mit 2 bis 20, bevorzugt 2 bis 4 C-Atomen steht und
o und p 0 oder 1 bedeuten,
umgesetzt.

Bevorzugte Dihydroxyverbindungen der Formel (II) sind Hydrochinon, Resorcin, 4,4′-Dihydroxydiphenyl, 4,4′-Dihydroxydiphenylether, 4,4′-Dihydroxydiphenylsulfid, 4,4′-Dihydroxydiphenylsulfon, 4,4′-Dihydroxydiphenylketon, Bis-2,2-(4-hydroxyphenyl)-propan, Bis-(4-hydroxyphenyl)-methan sowie 1,4-, 1,5-, 2,7- oder 2,6-Dihydroxynaphthalin. Gegebenenfalls können bis zu 90 Mol-%, bevorzugt 10 bis 50 Mol-%, der dicarboxylfunktionellen Stilbenverbindungen durch andere aromatische Dicarbonsäuren, wie Isophthalsäure, Terephthalsäure, 4,4′-Biphenyldicarbonsäure und/oder 2,6-Naphthalindicarbonsäure oder durch Carbonatstrukturen ersetzt werden.

Umgekehrt können nach dem erfindungsgemäßen Verfahren Polyester auch durch Umsetzung von Stilbenverbindungen der Formel (I), mit Z und Y = OH, mit aromatischen Dicarbonsäuren hergestellt werden Bevorzugte Dicarbonsäuren sind Isophthalsäure, Terephthalsäure, Terphenyldicarbonsäure, Tolandicarbonsäure, 4,4′- oder 3,4′-Benzophenondicarbonsäure, 4,4′- oder 3,4′-Diphenyletherdicarbonsäure, 1,4-, 1,5-, 2,7- und/oder 2,6-Naphthalindicarbonsäure. Bei Verwendung von Derivaten der Kohlensäure, wie Phosgen oder Diphenylcarbonat, können Polycarbonate oder Polyestercarbonate mit entsprechenden Eigenschaften erhalten werden. Gegebenenfalls können bis zu 90 Mol-%, bevorzugt 10 bis 50 Mol-%, der dihydroxylfunktionellen Stilbenverbindungen durch andere aromatische Dihydroxyverbindungen, wie 2,2-Bis-(4-hydroxyphenyl)-propan, Hydrochinon und/oder 4,4′-Dihydroxydiphenyl, ersetzt werden.

Polyamide können nach dem erfindungsgemäßen Verfahren durch Umsetzung von Stilbenverbindungen der Formel (I), mit Z und Y für COOH, COCl, COOR und R für $C_1$-$C_8$-Alkyl, mit Diaminoverbindungen der Formeln (III) und/oder (IV)

$H_2N$-Ar-$(X)_o$-$(Ar)_p$-$NH_2$ (III)

$H_2N$-Alk-$NH_2$ (IV)

erhalten werden, wobei

Ar für 6 bis 18 C-Atome enthaltende aromatische Reste steht, die gegebenenfalls durch Halogen (Fluor, Chlor, Brom), $C_1$-$C_4$-Alkyl-, $C_1$-$C_4$-Alkoxy-, $C_6$-$C_{10}$-Aryl- oder $C_6$-$C_{10}$-Aryloxyreste substituiert sein können,

X für -CO-, $-SO_2-$, -S-, $-CH_2-$, $-C(CH_3)_2-$, einen Alkylen- oder Alkylidenrest mit 2 bis 20, bevorzugt 2 bis 4 C-Atomen steht,

o und p für 0 oder 1 stehen und

Alk für einen 2 bis 40, bevorzugt 2 bis 20 C-Atome enthaltenden Alkylen- oder Alkylidenrest, wie Ethylen, 1,3-Propylen, 1,4-Butylen, 1,5-Pentamethylen, 1,6-Hexamethylen, 1,7-Heptamethylen, 1,8-Octamethylen, 1,10-Decamethylen, 1,12-Dodecamethylen, 1,2-Propylen, 1,1-Propyliden, 2,2-Butyliden, 2,2-Pentamethyliden, 3,3-Pentamethyliden steht.

Bevorzugte Diaminoverbindungen der Formel (III) sind 1,4-Diaminobenzol, 1,3-Diaminobenzol, 1,2-Diaminobenzol, 4,4′-Diaminobiphenyl, 4,4′-Diaminoterphenyl, 1,4-, 1,5-, 2,6- oder 2,7-Diaminonaphthalin, 2,6-Diaminoanthrachinon, 4,4′-Diaminodiphenylmethan, 3,4′-Diaminodiphenylmethan, 2,4′-Diaminodiphenylmethan, 3,3′-Diaminodiphenylmethan, 2,2′-Diaminodiphenylmethan, 4,4′-Diaminodiphenylether, 3,4′-Diaminodiphenylether, 3,3′-Diaminodiphenylether, 4,4′-Diaminodiphenylsulfid, 3,4′-Diaminodiphenylsulfon, 4,4′-Diaminodiphenylketon, 3,4′-Diaminodiphenylketon, 2,2-Bis-(4-aminophenyl)-propan oder 1,2-Bis-(4-aminophenyl)-ethan. Besonders bevorzugt ist die Verwendung von 1,4-Diaminobenzol, 1,3-Diaminobenzol oder 4,4′- bzw. 3,4′-Diaminodihenylether.

Bevorzugte Diaminoverbindungen der Formel (IV) sind 1,2-Diaminoethan, 1,3-Diaminopropan, 1,4-Diaminobutan, 1,5-Diaminopentan, 1,6-Diaminohexan, 1,7-D)iaminoheptan, 1,8-Diaminooctan, 1,10-Diaminodecan, 1,12-Diaminododecan, 1,18-Diaminooctadecan, 1,4-Diaminocyclohexan, 1,2-Diaminopropan oder 2,2-Diaminopropan. Besonders bevorzugt sind 1,6-Diaminohexan und 1,12-Diaminododecan.

Gegebenenfalls können bis zu 90 Mol-%, bevorzugt 10 bis 50 Mol-%, der dicarboxylfunktionellen Stilbenverbindungen durch andere aromatische Dicarbonsäuren, wie Terephthalsäure, Isophthalsäure, 4,4′-Biphenyldicarbonsäure, 2,6-Naphthalindicarbonsäure oder durch Carbonatstrukturen ersetzt werden.

Umgekehrt können nach dem erfindungsgemäßen Verfahren Polyamide auch durch Umsetzung von Stilbenverbindungen der Formel (I) mit Z und Y = $NH_2$ oder $NHCH_3$ mit aromatischen Dicarbonsäuren hergestellt werden. Bevorzugte Dicarbonsäuren sind Isophthalsäure, Terephthalsäure, Terphenyldicarbonsäure, Tolandicarbonsäure, 4,4′- oder 3,4′-Benzophenondicarbonsäure, 3,4′-oder 4,4′-Diphenyletherdicarbonsäure sowie 1,4-, 1,5-, 2,7-oder 2,6-Naphthalindicarbonsäure. Gegebenenfalls können bis zu 90 Mol-%, bevorzugt 10 bis 50 Mol-% der diaminofunktionellen Stilbenverbindungen durch andere aromatische Diaminoverbindungen, wie 1,4-Diaminobenzol, 1,3-Diaminobenzol, 4,4′-Diaminodiphenylmethan und/oder 4,4′-Diaminodiphenylether, ersetzt werden.

Bei der Herstellung der erfindungsgemäßen Polymeren können auch verzweigende drei- oder höherfunktionelle Monomere in Mengen von ca. 0,1 bis 1,0 %, bezogen auf die Menge an Stilbeneinheiten (I), eingesetzt werden. Geeignete Verzweiger sollten vorzugsweise gleiche funktionelle Gruppen wie die verwendeten Stilbenverbindungen (I) oder die verwendeten bifunktionellen Monomeren enthalten. Bevorzugter Verzweiger bei der Herstellung von Polyestern und Polyamiden ist die 1,3,5-Benzoltricarbonsäure.

Ebenso ist bei der Herstellung von niedrigschmelzenden Polymeren nach dem erfindungsgemäßen Verfahren die Verwendung monofunktioneller Verbindungen als Kettenabbrecher möglich. Die Kettenabbrecher können in Mengen von ca. 0,5 bis 5 Mol-%, bezogen auf die Menge an Stilbeneinheiten (I) eingesetzt werden. Geeignete Kettenabbrecher sollten vorzugsweise die gleiche funktionelle Gruppe wie die verwendete Stilbenverbindung (I) oder die verwendeten bifunktionellen Monomeren enthalten. Bevorzugte Kettenabbrecher bei der Herstellung von Polyestern und Polyamiden sind Benzoesäure, 4-Biphenylcarbonsäure, Naphthalincarbonsäure-(2), Phenol, p-tert.-Butylphenol, p-Isooctylphenol, $\beta$-Naphthol, Aminobenzol, 4-Aminobiphenyl und/oder 2-Aminonaphthalin.

Die Zahlenmittel der Molekulargewichte nach dem erfindungsgemäßen Verfahren hergestellter Polymere liegen im Bereich von 1000 bis 100 000 g/Mol, vorzugsweise 5000 bis 50 000 g/Mol. Die Messung der Molekulargewichte ist z.B. durch Gelpermeationschromatographie (GPC) in geeigneten Lösungsmitteln, wie Dichlormethan, Chloroform, Tetrahydrofuran oder Dimethylformamid, möglich.

Eine bevorzugte Ausführungsform des erfindungsgemäßen Herstellungsverfahrens im Falle von Polyestern, Polycarbonaten, Polyestercarbonaten oder Polyamiden ist die Lösungspolykondensation. Hierbei werden aktivierte Dicar bonsäurederivate, wie Dicarbonsäuredichloride, mit Diaminen oder Dihydroxyverbindungen in organischen Lösungsmitteln umgesetzt, die sowohl die Ausgangsverbindungen als auch die entstehenden Polymeren solvatisieren können. Entsprechende Lösungsmittel können z.B. Pyridin, Dichlormethan, Chloroform, Chlorbenzol, Tetrahydrofuran, Dimethylformamid, Dimethylacetamid und/oder N-Methylpyrrolidon sein. Im Falle der Synthese von Polyamiden kann die Polymerlöslichkeit durch Zugabe bestimmter Salze, wie LiCl und/oder $CaCl_2$, erhöht werden. Die Gesamtkonzentration der entsprechenden Polymere liegt im Bereich von ca. 0,5 bis 30 Gew.-%, vorzugsweise im Bereich von 5 bis 20 Gew.-%. Während der Polykondensation entstehende Spaltprodukte, wie HCl, können entweder gasförmig aus der Reaktionsmischung ausgetragen oder chemisch gebunden werden, d.h. z.B. durch Pyridin oder andere Basen.

Die Reaktion wird bevorzugt bei Temperaturen von -10 °C bis 100 °C ausgeführt, besonders bevorzugt ist jedoch ein Temperaturbereich von 0 bis 30 °C. Die Reaktionszeit beträgt üblicherweise 5 bis 180 Minuten, vorzugsweise 10 bis 60 Minuten.

Das Molverhältnis der eingesetzten Dicarbonsäurederivate zu den eingesetzten Diaminen oder Dihydroxyverbindungen beträgt ca. 1,0:0,9-1,2, vorzugsweise 1,0:1,0. Weitere Hinweise zur Durchführung von Lösungspolykondensationen finden sich beispielsweise in Odian, "Principles of Polymerization", 2. Edition, John Wiley and Sons, New York 1981.

Eine weitere Ausführungsform des erfindungsgemäßen Herstellungsverfahrens im Falle von Polyestern, Polyestercarbonaten, Polycarbonaten und Polyamiden ist die Phasengrenzflächenpolykondensation. Hierbei werden in einem Zweiphasensystem, bestehend aus einer organischen und einer alkalisch-wäßrigen Phase, aktivierte Dicarbonsäurederivate, wie Dicarbonsäuredichloride, mit Dihydroxyverbindungen umgesetzt. Als organische Phase können solche Lösungsmittel Verwendung finden, die sowohl die aktivierten Dicarbonsäurederivate als auch die entstehenden Polymeren solvatisieren, und nicht mit Wasser mischbar sind. Geeignete Lösungsmittel sind z.B. Dichlormethan, Chloroform und/oder Chlorbenzol. Die wäßrige Phase wird durch Zusatz basischer anorganischer Stoffe, wie NaOH und/oder KOH, auf einen pH-Wert von ca. 8 bis 14 eingestellt; vorzugsweise liegt der pH-Wert im Bereich von 9 bis 13. Das Volumenverhältnis der organischen zur wäßrigen Phase kann bei 5:1 bis 1:5, vorzugsweise bei 1,5:1 bis 1:1,5, liegen. Die Konzentration der entstehenden Polymere - bezogen auf die organische Phase -sollte 0,5 bis 30 Gew.-%, vorzugsweise 5 bis 20 Gew.-%, betragen.

Zur Anhebung der Reaktionsgeschwindigkeit können Katalysatoren in Mengen von ca. 0,1 bis 10 Mol-%, bezogen auf die Menge an eingesetzter Dihydroxyverbindung, eingesetzt werden. Geeignete Katalysatoren sind tertiäre Amine, wie Triethylamin, N-Ethylpiperidin und/oder quartäre Ammoniumsalze, wie Tetraethylammoniumbromid, Tetrabutylammoniumbromid und/oder Triethylbenzylammoniumbromid. Die Reaktion wird bevorzugt bei Temperaturen von 5 bis 95 °C ausgeführt, besonders bevorzugt ist ein Temperaturbereich von 5 bis 30 °C. Die Reaktionszeit sollte 5 bis 180 Minuten, vorzugsweise 10 bis 60 Minuten, betragen. Das Molverhältnis der eingesetzten Dicarbonsäurederivate zu den eingesetzten Dihydroxyverbindungen beträgt üblicherweise 1,0:0,9-1,5, vorzugsweise 1,0:1,0. Weitere Hinweise zur Durchführung von Phasengrenzflächenpolykondensationen finden sich beispielsweise in Odian, "Principles of Polymerization", 2. Edition, John Wiley and Sons, New York 1981.

Die nach dem erfindungsgemäßen Verfahren hergestellten niedrigschmelzenden Polymeren, die mindestens eine Z-konfigurierte Stilbengruppierung enthalten, können entweder in der Schmelze oder aus der Lösung formgebend verarbeitet werden. Bei der Formgebung in der Schmelze wird zunächst das Lösungsmittel, das bei dem erfindungsgemäßen Verfahren zugegen ist, entfernt und anschließend wird das

Polymere bei Temperaturen bis zu 250 °C verarbeitet. Durch Spritzgießen oder Spritzpressen lassen sich auf diese Weise Formkörper, durch Extrusion Fasern, Filamente, Folien, Platten oder Profile herstellen. Der Formgebungsprozeß aus Lösung beinhaltet eine Verformung mit anschließender Verfestigung des Polymeren in Fällbädern oder durch Abdampfen des Lösungsmittels. Durch Extrusion in Fällbädern lassen sich auf diese Weise Fasern, Filamente oder Folien herstellen, die anschließend durch Waschen und Trocknen von Lösungsmittelresten befreit. werden Geeignete Fällbäder enthalten beispielsweise Methanol, Isopropanol oder andere passende Alkohole, gegebenenfalls in Mischung mit Wasser. Folien oder Überzüge können durch Verstreichen der Polymerlösung und anschließendes Abdampfen des Lösungsmittels erhalten werden. Vorzugsweise erfolgt die Formgebung der nach dem erfindungsgemäßen Verfahren hergestellten Polymeren aus der Lösung. Die auf diese Weise verarbeiteten, nach dem erfindungsgemäßen Verfahren hergestellten Polymere können durch Umwandlung der in den Polymeren vorhandenen Z-konfigurierten Stilbeneinheiten in die E-Konfiguration in hochschmelzende und hochwärmeformbeständige Kunststoffartikel der oben beschriebenen Art überführt werden.

Die Umwandlung der Z-Konfiguration der Stilbeneinheiten in die E-Konfiguration bei den Polymeren kann bei Temperaturen von ca. 250 bis 500 °C, bevorzugt 300 bis 400 °C, und/oder durch Bestrahlung im Wellenlängenbereich von 200 bis 800 nm, bevorzugt 250 bis 400 nm, erfolgen. Bevorzugt wird die Konfigurationsumwandlung der Stilbeneinheiten im Polymeren in der Wärme durchgeführt.

Hierzu werden die aus dem Formgebungsprozeß resultierenden Formkörper über einen Zeitraum von $10^0$ bis $10^5$ sec einer Temperatur im Bereich von 250 bis 500 °C ausgesetzt. Besonders bevorzugt wird die thermische Umwandlung bei Temperaturen von 300 bis 400 °C während $10^1$ bis $10^3$ sec durchgeführt. Differentialkalorimetrische Beobachtungen zeigen, daß der Umwandlungsprozeß von einer starken negativen Wärmetönung begleitet ist.

Nach einer anderen Ausführungsform wird die Umwandlung durch Bestrahlung entsprechender Fasern, Folien, Fila mente oder Überzüge bewirkte. Die Bestrahlung kann mit monochromatischem oder polychromatischem Licht im Wellenlängenbereich von 200 bis 800 nm erfolgen. Vorzugsweise wird die Bestrahlung mit polychromatischem Licht der Wellenlänge von 250 bis 400 nm durchgeführt. Weiterhin wird die Bestrahlung vorzugsweise bei Temperaturen oberhalb der Glasübergangstemperatur der entsprechenden Polymeren vorgenommen.

Die nach dem erfindungsgemäßen Verfahren hergestellten Polymeren, die mindestens eine Z-konfigurierte Stilbengruppierung enthalten, eignen sich wegen ihrer leichten Verarbeitbarkeit wie bereits erwähnt besonders zur Herstellung von Formkörpern, Fasern, Filamenten, Folien und Überzügen, die nach entsprechender thermischer Behandlung und/oder Bestrahlung zu besonders wärmeformbeständigen und chemikalienbeständigen Artikeln umgewandelt werden können. Solche Artikel werden überwiegend eingesetzt im Elektro- und Elektronikbereich, im Transportwesen oder im chemischen Anlagenbau.

Die nach dem erfindungsgemäßen Verfahren hergestellten Polymeren können auch mit anderen Thermoplasten, wie Polystyrol, Polyethylen, Polypropylen, Polyvinylchlorid, Polyestern, Polyamiden, Polycarbonaten, Polyacetalen, aromatischen Polyethern, Polysulfonen, Poly-(p-phenylensulfiden), Polyetherketonen und/oder flüssigkristallinen Polyestern durch Lösungs- oder Schmelzcompoundierung vermischt werden. Dabei sind Mischungen bevorzugt, die ca. 1 bis 50 Gew.-% der nach dem erfindungsgemäßen Verfahren hergestellten Polymeren enthalten. Den erfindungsgemäß hergestellten Polymeren können in üblicher Weise Verstärker- oder Füllstoffe, wie Glas-, Kohle- oder Aramidfasern, Glimmer, Talkum, Ruß, Graphit und/oder Quarzgut, in Mengen von ca. 5 bis 65 Gew.-%, bevorzugt 10 bis 40 Gew.-%, zugemischt werden.

Die nachfolgenden Beispiele sollen das erfindungsgemäße Verfahren verdeutlichen.

Beispiel 1

Herstellung eines Polyesters aus cis-Stilbendicarbonsäuredichlorid/4,4′-Dihydroxydiphenylether und nachfolgende Isomerisierung zum hochschmelzenden all-trans-Polyester

In einen 1000 ml-Wellenbrecherkolben, ausgerüstet mit KPG-Rührer, Stickstoffeinleitung und Rückflußkühler wurden unter Stickstoff folgende Substanzen eingewogen:

8,16 g = 0,0404 Mol 4,4′-Dihydroxydiphenylether

7,20 g = 0,0812 Mol konz. Natronlauge (45 %ig)

400 ml dest. Wasser

160 ml Dichlormethan (unstabilisiert)

0,14 g Tetrabutylammoniumbromid (≙1 Mol-%)

Durch Rühren bei Raumtemperatur wurden innerhalb von 20 Minuten alle Reaktanden gelöst. Anschließend wurde unter schnellem Rühren eine unter strengem Feuchtigkeitsausschluß hergestellte Lösung von
12,2 g = 0,0400 Mol cis-4,4′-Stilbendicarbonsäuredichlorid in
60 ml Dichlormethan (unstabilisiert)
zugegeben und 30 Minuten bei Raumtemperatur (20 °C) nachgerührt. Zur Aufarbeitung wurde die organische Phase abgetrennt, mit Essigsäure angesäuert, mit destilliertem Wasser elektrolytfrei gewaschen, bei Raumtemperatur eingeengt und der erhaltene Rückstand über Nacht bei Raumtemperatur im Vakuumtrockenschrank getrocknet.

Es wurden 15,77 g eines transparenten, farblosen Produktes mit einer relativen Lösungsviskosität von 1,61 (Dichlormethan, 25 °C, c = 0,5 g/dl) erhalten. Aus Lösungen in Dichlormethan konnten transparente, zähe Filme gegossen werden. Bei Untersuchung mit einem Heiztischmikroskop wurd eine Erweichungstemperatur von 200 °C gefunden.

Zur Überführung in die hochwärmeformbeständige all-trans-Form wurden 1 g des Polymeren über einen Zeitraum von 30 Minuten auf eine Temperatur von 300 °C erhitzt. Hierbei wird eine Eintrübung sowie eine Schrumpfung beobachtet. Nach erfolgter Temperung wird bei heiztischmikroskopischer Untersuchung kein Erweichen oder Aufschmelzen bis zur Obergrenze des einstellbaren Temperaturbereiches von 400 °C gefunden.

Bei differentialthermoanalytischer (DSC) Charakterisierung des ungetemperten Reaktionsproduktes wird eine Glasübergangstemperatur von 144 °C beobachtet. Bei weiterer Aufheizung folgt ein stark exothermer Übergang ($\Delta H$ = -73 J/g) mit einem Peakmaximum bei 353 °C, der Isomerisierungs- bzw. Kristallisationsvorgängen zugeschrieben werden kann. In zweiter Aufheizung tritt bis zu einer Temperatur von 400 °C kein Glas- oder Schmelzübergang auf.

## Vergleichsbeispiel

Herstellung eines Polyesters aus cis-Stilbendicarbonsäure/4,4′-Dihydroxydiphenylether durch Schmelzpolykondensation

Eine Schmelzpolykondensationsapparatur bestehend aus 100 ml-Rundkolben, Kondensationsaufsatz, KPG-Rührer und Stickstoffeinleitung wurde dreimal ausgeheizt und bestickt. Unter Stickstoff wurden folgende Substanzen eingewogen:
5,06 g = 0,025 Mol 4,4′-Dihydroxydiphenylether
6,71 g = 0,025 Mol cis-4,4′-Stilbendicarbonsäure
5,36 g = 0,0525 Mol Acetanhydrid
15 g Essigsäure
1 mg Magnesiumacetat

Die Reaktionsmischung wurde mittels Ölbad auf 170 °C erhitzt und anschließend über einen Zeitraum von 3 h die Temperatur in mehreren Stufen bis auf 270 °C angehoben; hierbei destillierte die Hauptmenge Essigsäure ab. Durch nochmaliges Anheben der Temperatur bis auf 300 °C stieg die Viskosität der dunkelbraunen Schmelze allmählich an, nach 30 Minuten wurde die Reaktionsmischung fest. Zur Vervollständigung der Essigsäureabspaltung wurde schließlich der Druck in mehreren Stufen während 45 Minuten bis auf 0,8 mbar abgesenkt (Destillatmenge: 19,5 g). Nach Abkühlung wurde ein sprödes, braunes Pulver erhalten, das bei Untersuchung mit einem Heiztischmikroskop bis zu Temperaturen von 350 °C nicht erweichte. Das Produkt war in Dichlormethan nicht löslich. Bei differentialthermoanalytischer (DSC) Charakterisierung wurde in erster Aufheizung bis 400 °C keine Glasübergangs- oder Schmelztemperatur beobachtet. Das Reaktionsprodukt war weder aus Lösung noch aus der Schmelze verarbeitbar.

## Beispiel 2

Herstellung eines Polyesters aus cis-Stilbendicarbonsäuredichlorid/Bisphenol-A nach dem Phasengrenzflächenverfahren

In einem 250 ml-Wellenbrecherkolben, ausgerüstet mit KPG-Rührer, Stickstoffeinleitung und Rückflußkühler wurden unter Stickstoff folgende Substanzen eingewogen:
4,61 g = 0,0202 Mol 2,2-Bis-(4-hydroxyphenyl)-propan (Bisphenol A)
3,60 g = 0,0406 Mol konz. Natronlauge (45 %ig)
65 ml dest. Wasser
30 ml Dichlormethan (unstabilisiert)
70 mg Tetrabutylammoniumbromid (≙ 1 Mol-%)

Durch Rühren bei Raumtemperatur wurden innerhalb von 20 Minuten alle Reaktanden gelöst. Anschließend wurde unter sehr schnellem Rühren (800 U/min) eine unter strengem Feuchtigkeitsausschluß hergestellte Lösung von

6,1 g = 0,02 Mol cis-4,4′-Stilbendicarbonsäuredichlorid in
20 ml Dichlormethan (unstabilisiert)

zugegeben und 30 Minuten bei Raumtemperatur (20 °C) nachgerührt. Zur Aufarbeitung wurde die organische Phase abgetrennt, mit Essigsäure angesäuert, mit destilliertem Wasser elektrolytfrei gewaschen, bei Raumtemperatur eingeengt und der erhaltene Rückstand über Nacht bei Raumtemperatur im Vakuumtrockenschrank getrocknet.

Es wurden 7,4 g eines transparenten, farblosen Produktes mit einer relativen Lösungsviskosität von 1,85 (Dichlormethan, 25 °C, c = 0,5 g/dl) erhalten. Aus Lösung in Dichlormethan konnten transparente, zähe Filme gegossen werden. Bei Untersuchung mit einem Heiztischmikroskop wurde eine Erweichungstemperatur von 200 °C gefunden.

Bei differentialthermoanalytischer Charakterisierung (DSC) des Reaktionsproduktes wird in erster Aufheizung eine Glasübergangstemperatur von 173 °C beobachtet. Bei weiterer Aufheizung folgt ein stark exothermer Übergang (ΔH = -39 J/m) mit einem Peakmaximum bei 344 °C, der Isomerisierungs- bzw. Kristallisationsvorgängen zugeschrieben werden kann. In zweiter Aufheizung trat bis zu einer Temperatur von 400 °C kein Glas- oder Schmelzübergang auf.

## Beispiel 3

Herstellung eines Copolyesters aus cis-Stilbendicarbonsäuredichlorid/Bisphenol-A/4,4′-Dihydroxydiphenyl nach dem Phasengrenzflächenverfahren

In einem 250 ml-Wellenbrecherkolben, ausgerüstet mit KPG-Rührer, Stickstoffeinleitung und Rückflußkühlung wurden unter Stickstoff folgende Substanzen eingewogen:

2,28 g = 0,01 Mol 2,2-Bis-(4-hydroxyphenyl)-propan (Bisphenol-A)
1,86 g = 0,01 Mol 4,4-Dihydroxydiphenyl
3,60 g = 0,0406 Mol konz. Natronlauge (45 %ig)
55 ml dest. Wasser
25 ml Dichlormethan (unstabilisiert)
0,07 g Tetrabutylammoniumbromid (≙ 1 Mol-%)

Durch Rühren bei Raumtemperatur wurden innerhalb von 20 Minuten alle Reaktanden gelöst. Anschließend wurde unter schnellem Rühren eine unter strengem Feuchtigkeitsausschluß hergestellte Lösung von

6,1 g = 0,02 Mol cis-4,4′-Stilbendicarbonsäuredichlorid in
30 ml Dichlormethan (unstabilisiert)

innerhalb von einer Minute zugetropft und 30 Minuten bei Raumtemperatur (20 °C) nachgerührt.

Zur Aufarbeitung wurde die organische Phase abgetrennt, mit Essigsäure angesäuert, mit destilliertem Wasser elektrolytfrei gewaschen, bei Raumtemperatur eingeengt und der erhaltene Rückstand über Nacht bei Raumtemperatur im Vakuumtrockenschrank getrocknet.

Es wurden 6,4 g eines transparenten, hellgelben Produktes erhalten, das einem erneuten Auflösen in Dichlormethan nicht zugänglich war. Bei Untersuchung mit einem Heiztischmikroskop wurde eine Erweichungstemperatur von 210 °C gefunden.

Bei differentialthermoanalytischer Charakterisierung (DSC) des Reaktionsproduktes wird in erster Aufheizung eine Glasübergangstemperatur von 189 °C beobachtet.

Bei weiterer Aufheizung folgt ein stark exothermer Übergang (ΔH = -70 J/g) mit einem Peakmaximum bei 339 °C, der Isomerisierungs- bzw. Kristallisationsvorgängen zugeordnet werden kann. In zweiter &ufheizung tritt bis zu einer Temperatur von 400 °C kein Glas- oder Schmelzübergang auf.

## Beispiel 4

Herstellung eines Polyamids aus cis-Stilbendicarbonsäuredichlorid/1,4-Diaminophenylen nach dem Phasengrenzflächenverfahren

In den 250 ml-Planschliffkolben, ausgerüstet mit Planschliffdeckel, Metallrührer, Stickstoffeinleitung und Rückflußkühler, wurden unter Stickstoff folgende Substanzen eingewogen:

40 ml N-Methylpyrrolidon (destilliert)
12,0 g Calciumchlorid (trocken)

Bei Raumtemperatur (20 °C) wurde 30 Minuten gerührt und anschließend
2,59 g = 0,024 Mol 1,4-Diaminobenzol und
14,4 g Dimethylanilin
zugegeben. Nach 15-minütigem Rühren wurde die Rührerdrehzahl von 600 $min^{-1}$ auf 2000 $min^{-1}$ gesteigert und unter strengem Feuchtigkeitsausschluß
7,32 g = 0,024 Mol cis-4,4′-Stilbendicarbonsäuredichlorid
eingetragen und mit 20 ml N-Methylpyrrolidon nachgespült. Sofort setzte eine exotherme Reaktion, begleitet von einem starken Viskositätsanstieg, ein. Durch Zugabe von 50 ml N-Methylpyrrolidon wurde die viskose Lösung verdünnt und anschließend 1 Stunde bei Raumtemperatur (20 °C) nachgerührt.

Zur Aufarbeitung wurde in 3 l Wasser gefällt, abgesaugt, elektrolytfrei gewaschen und zweimal mit je 750 ml Methanol aufgekocht. Nach Absaugen und 16-stündiger Vakuumtrocknung (T = 50 °C) wurden 7,07 g eines fasrigen, gelbgrünen Produktes erhalten. Die durch Heiztischmikroskopie bestimmte Erweichungstemperatur lag bei 170 °C.

Bei differentialthermoanalytischer Charakterisierung (DSC) des Reaktionsproduktes wird in erster Aufheizung eine Glasübergangstemperatur von 170 °C beobachtet. Bei weiterer Aufheizung folgt ein stark exothermer Übergang ($\Delta H$ = -79 J/g) mit einem Peakmaximum bei 360 °C, der Isomerisierungs- bzw. Kristallisationsvorgängen zugeschrieben werden kann. In zweiter Aufheizung tritt bis zu einer Temperatur von 400 °C kein Glas- oder Schmelzübergang auf.

## Ansprüche

1. Verfahren zur Herstellung von niedrigschmelzenden Polymeren, die mindestens eine Z-konfigurierte Stilbengruppierung enthalten, dadurch gekennzeichnet, daß man Z-konfigurierte, bifunktionelle Stilbenverbindungen der Formel (I)

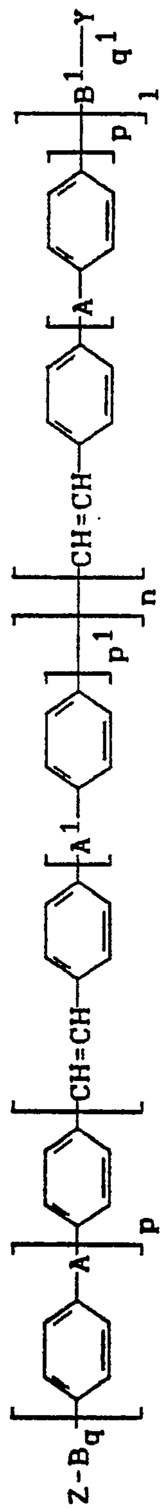

(I),

worin

Z und Y gleich oder verschieden sind und für COR, COOR, COCl, OCOCl, NCO, NRCOCl, NHR, OR oder Cl stehen mit R = Wasserstoff oder $C_1$-$C_8$-Alkyl,
A und $A^1$ gleich oder verschieden sind und für eine chemische Bindung oder CH = CH stehen,

B 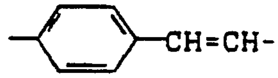 und

$B^1$ 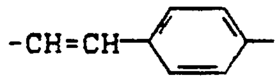 bedeuten,

l 0 oder 1,
p und $p^1$ 0 oder 1,
q und $q^1$ 0 oder 1 und
n 0, 1 oder 2 bedeuten,
mit bifunktionellen Monomeren, Oligomeren oder höhermolekularen Komponenten, die bekanntermaßen für den Aufbau von Polyestern, Polycarbonaten, Polyamiden, Polyurethanen, Polyethern oder Polyphenylensulfiden in Frage kommen, bei Temperaturen von -30 bis 250 °C, gegebenenfalls in Gegenwart von organischen Lösungs- und/oder Verdünnungsmitteln und/oder Katalysatoren unter Erhalt der Z-Konfiguration der Stilbeneinheiten umsetzt.

2. Verfahren nach Anspruch 1, dadurch gekennzeichnet, daß man die Umsetzung bei Temperaturen von -10 bis 100 °C durchführt.

3. Verwendung der nach Anspruch 1 hergestellten niedrigschmelzenden Polymeren mit mindestens einer Z-konfigurierten Stilbengruppierung zur Herstellung von hochschmelzenden und hochwärmeformbeständigen Kunststoffartikeln.